# EUROPEAN PATENT APPLICATION

(11) **EP 1 978 648 A1**
(43) Date of publication of application: **08.10.2008**
(21) Application number: 08153559.3
(22) Date of filing: 28.03.2008
(51) Int. Cl.: H04B 1/38

(54) **Watch-like cell phone**

(30) Priority: 04.04.2007 TW 96112054
(71) Applicant: Chiang, Akina, 221 Xizhi City, Taipei County (TW)
(72) Inventor: Chiang, Akina, 221 Xizhi City, Taipei County (TW)
(74) Representative: Beck & Rössig European Patent Attorneys

(57) **Abstract**

A watch-like cell phone has a cell phone module (20), a strap module (30) and one or more expandable modules (40) connected between them for fitting the cell phone module (20) to a user's wrists to serve as a watch model for displaying time or as a cell phone model for displaying information, receiving or transmitting information and receiving or sending voices, wherein the cell phone module (20) has a main body (21) comprising a rectangular LCD display (22) and twelve numerical symbol input keys each arranged to a position surrounded on the perimeter of the rectangular LCD display (22) and served as a one-hour hand sequentially from the first hour to the twelfth hour for an electronic clock shown on the rectangular LCD display (22) when the cell phone module (20) is in watch model.

## Description

### BACKGROUND OF THE PRESENT INVENTION

### 1. Field of the Present Invention

The invention relates to a watch-like cell phone, and more particularly to a cell phone capably worn around a user's wrists and served as a watch as well.

### 2. Description of Prior Art

As the telecommunication technology advances rapidly, the purpose of cell phones has been widely diversified, and the combination of the mobile telecommunication technology with the Internet has even allowed users to obtain a variety of information from the Internet via the cell phone, which includes e-news, e-magazines, e-books, e-movies, and e-commercials. Clearly, the cell phone has become an indispensable commodity for people nowadays.

However, users of cell phones usually carry their cell phones around in pockets, on belts or hanged on personal bags or luggage. Consequently, cell phones are prone to getting lost, and users must get their cell phones from pockets, belts, personal bags or luggage when they need to make phone calls, browse news and information from the Internet like e-magazines, e-books, e-movies, and e-commercials, which is very inconvenient.

Since the cell phones have become an indispensable tool in people's daily lives, more emphasis should be focused on the portability and the convenience of the cell phones. If a cell phone may be worn around a user's wrists and also serve as a watch, this would make the cell phone easier to carry around but less prone to loss. More importantly, it would be more convenient to use the cell phone for browsing information from the Internet.

### SUMMARY OF THE PRESENT INVENTION

A primary objective of the invention is to propose a watch-like cell phone that may serve as a watch and a cell phone, and may be worn around a user's wrists in order to serve as a watch that displays time and information, receives and transmits information, as well as receiving and sending voices. The watch-like cell phone is comprised of a cell phone module and a strap module connected to each other, and the strap module may be selected from flexible textiles, rubber, polyester materials, flexible printed circuits (FPC) and flat flexible cables (FFC). Wherein the cell phone module has a main body having a circuit board that allows the cell phone module to serve as a watch or a cell phone; the main body has a LCD display and twelve numerical symbol input keys. When the cell phone module is used as a cell phone and standing by, the LCD display may graphically display hands and hours of an electronic clock, and positions of the twelve numerical symbol input keys are used to divide a twelve-hour period into twelve hours, and sequentially indicate the first hour to the twelfth hour.

One or more expandable module may be connected between the cell phone module and the strap module of the watch-like cell phone of the invention, and the expandable module may be selected from a digital camera module having a lens, a memory module, a Bluetooth module, a GPS module, an MP3 module, or an electronic module that may receive and send voices.

The aforesaid twelve numerical symbol input keys may be entirely disposed on an external perimeter surrounding the LCD display of the main body, or entirely disposed on lateral sides of the main body, or have a part of the numerical symbol input keys disposed on lateral sides of the main body and the other part of the numerical symbol input keys disposed on an external perimeter surrounding the LCD display of the main body.

Moreover, the aforesaid flexible printed circuit (FPC) of the strap module may further include thereon a lens for the digital camera, keys for the alphabets "A-Z", an USB slot, or an electronic module that may receive and send voices.

### BRIEF DESCRIPTION OF DRAWINGS

The structure and the technical means adopted by the present invention to achieve the above and other objectives can be best understood by referring to the following detailed description of the preferred embodiments and the accompanying diagrams, wherein:
Fig. 1 is a schematic drawing that shows one of the preferred embodiments of the watch-like cell phone according to the invention;
Fig. 2 is a schematic drawing that shows the watch-like cell phone shown in Fig. 1 from a different perspective;
Fig. 3 is a schematic drawing that shows another preferred embodiment of the watch-like cell phone according to the invention;
Fig. 4 is a schematic drawing that shows yet another preferred embodiment of the watch-like cell phone according to the invention;
Fig. 5 is a schematic drawing that shows still another preferred embodiment of the watch-like cell phone according to the invention;
Fig. 6 is a schematic drawing that shows still another preferred embodiment of the watch-like cell phone according to the invention;
Fig. 7 is a schematic drawing that shows a further preferred embodiment of the watch-like cell phone according to the invention.

### DETAILED DESCRITION OF THE PREFERRED EMBODIMENTS

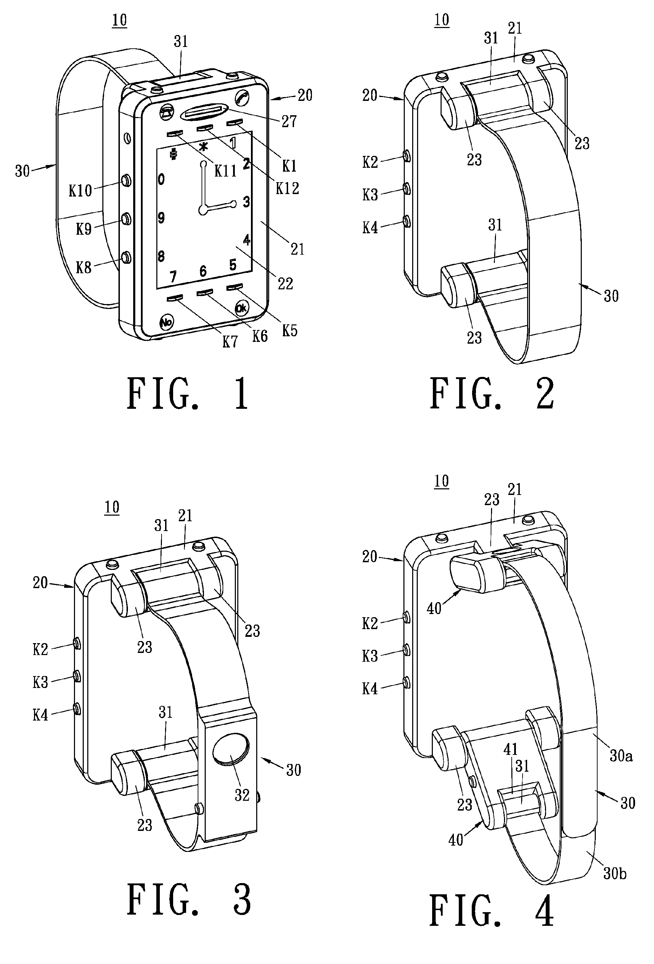

A watch-like cell phone 10 of the invention is shown in Figs. 1 and 2, which is a miniaturized cell phone that may be worn around a user's wrists or ankles, or bound onto belts or bags, and may display time and allow the user to communicate wirelessly.

There are two preferred embodiments for the watch-like cell phone 10, and one of the preferred embodiments is shown in Figs. 1 and 2, which is comprised of a cell phone module 20 and a strap module 30 connected to each other, thus allowing the watch-like cell phone 10 to serve as a watch model and a cell phone model.

Another preferred embodiment of the watch-like cell phone 10 is shown in Fig s. 4 or 5, which is comprised of a cell phone module 20, one or more expandable module 40, and a strap module 30 connected to each other. In addition to serving as a watch model and a cell phone model, the function of the watch-like cell phone 10 may be further extended by connecting one or more expandable module 40 between the cell phone module 20 and the strap module 30. For example, the connected expandable module 40 may be selected from a digital camera module having a lens 42, a memory module, a Bluetooth module, a GPS module, an MP3 module, or an electronic module that may receive and send voices.
As indicated in Figs. 1 and 2, the cell phone module 20 has a main body 21 formed as a watch, and the main body 21 includes therein a circuit board (not shown) for allowing the cell phone module 20 to serve as a watch model and a cell phone model. The main body 21 of the cell phone module 20 not only has a voice module 27 for receiving or sending voices, but also has a rectangular LCD display 22 for displaying time in watch model or displaying received or transmitted information in cell phone model, and twelve numerical symbol input keys K1-K12 for inputting controlled information and corresponding to twelve inputting symbols including "0-9", "#" and "*" respectively.

When the cell phone module 20 is used as a cell phone and standing by, the cell phone module 20 is also automatically switched in watch model for showing time so that at the moment the LCD display 22 of the main body 21 is going to graphically display hands and hours of an electronic clock. In addition, there are twelve symbols of respectively representing "0-9", "#" and "*" collectively surrounded on the perimeter of the rectangular LCD display 22 and each of the twelve symbols is served as a one-hour hand for an electronic clock when shown on the rectangular LCD display 22. And, once the cell phone module 20 is going to be in cell phone model, the LCD display 22 of the main body 21 instantly switches to an interface for displaying input/output information.

Referring to Figs. 1 and. 5, the twelve numerical symbol input keys K1-K12 are designated to respectively serve as input keys for twelve symbols including "0-9", "#" and "*", when the cell phone module 20 is in cell phone model. As a result, the cell phone module 20 may display time in watch model, or display information, receive or transmit information, as well as receiving or sending voices in cell phone model.

Another feature of the watch-like cell phone 10 of the invention is that the twelve numerical symbol input keys K1-K12, in addition to serving as the input keys for corresponding numbers and symbols, are also respectively positioned in a designed location to sequentially indicate from the first hour to the twelfth hour.

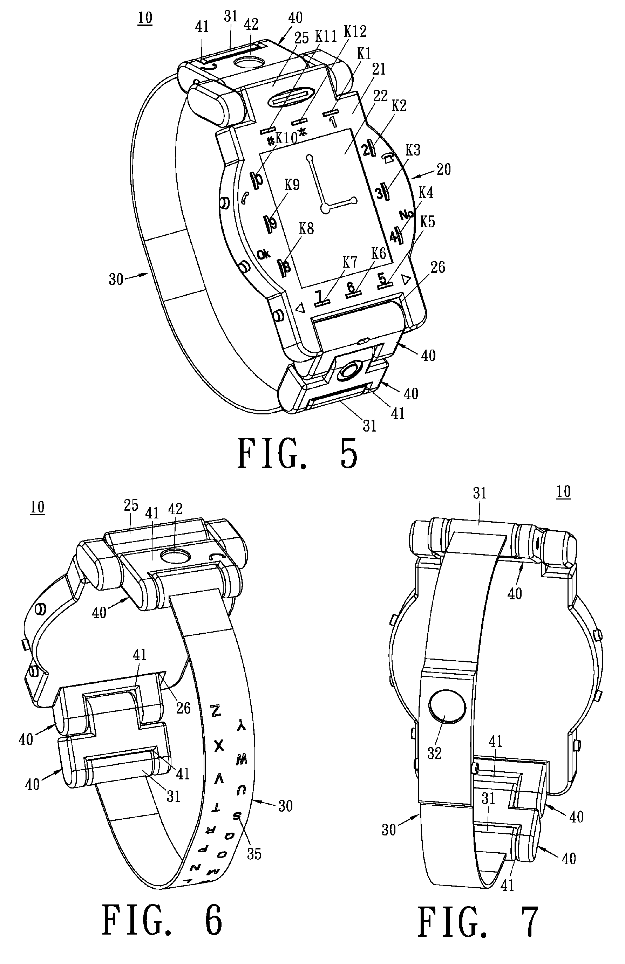

Basing on this principle, the positions of the twelve numerical symbol input keys K1-K12 may be arranged in a way shown in Fig. 5, in which all of the numerical symbol input keys K1-K12 are disposed on an external perimeter surrounding the LCD display 22 of the main body 21, or arranged in a way shown in Fig. 1, in which a part of the numerical symbol input keys K1-K12 are disposed on lateral sides of the main body 21, and another part of the numerical symbol input keys K1-K12 are disposed on an external perimeter surrounding the LCD display 22 of the main body 21, or have all of the numerical symbol input keys K1-K12 disposed on lateral sides of the main body 21.

Referring to Figs. 2 and 4, the main body 21 of the cell phone module 20 further includes a connecting portion 23 respectively disposed on two rear lateral sides thereof for connecting the strap module 30 or the expandable module 40. Or refer to Fig. 5 and Fig. 6, a protruding portion 25 and a recess 26 are respectively disposed at two opposite lateral sides of the main body 21 of the cell phone module 20 for connecting the strap module 30 or the expandable module 40.

Referring to Figs. 5 and 6, the expandable module 40 further has a recess 41. When the expandable module 40 is connected to the main body 21 of the cell phone module 20, the recess 41 thereof is used to connect the strap module 30. Alternatively, the recess 41 may be used to connect a further expandable module 40, and the recess 41 of the lately added expandable module 40 is used to connect the strap module 30.

Referring to Figs. 1 to 7, the strap module 30 is a strap-like part which each end has a connector 31 respectively to connect the cell phone module 20 or the expandable module 40 together. Therefore, the watch-like cell phone 10 of the invention may be selectively comprised of a cell phone module 20 and a strap module 30, or comprised of a cell phone module 20, one or more expandable module 40 and a strap module 30.

And, the strap module 30 may be comprised of water-resistant but non-conductive flexible textiles, or as shown in Fig. 4 a pair of matching straps 30a and 30b made of rubber or polyester materials. Furthermore, the strap module 30 may also be comprised of flexible printed circuits (FPC) or flat flexible cables (FFC) that have excellent conductivity and water-resistance. The flexible printed circuits of the strap module 30 (or the flat flexible cables of the strap module 30) may be electrically connected to circuit boards (not shown) inside of the cell phone module 20 via electrical wiring.

Moreover, as shown in Figs. 6 or 7 the flexible printed circuits of the strap module 30 may further include thereon keys 35 for the alphabets "A-Z", a lens 32 for a digital camera, an USB slot or an electronic module that may receive and send voices. Further, the connector 31 of the strap module 30 may include an electronic device for receiving and sending voices or an electronic device having a lens for a miniature digital camera. As a result, the watch-like cell phone 10 of the invention may be easily expanded in respect to functions by selectively connecting flexible printed circuits (FPC) of the strap module 30 that have different functions.

## Claims

1. A watch-like cell phone, comprising:
a cell phone module (20), a strap module (30) and one or more expandable modules (40) connected between the cell phone module (20) and the strap module (30), wherein the cell phone module (20) includes a main body (21) having a circuit board for allowing the cell phone module (20) to be selectively served as a watch model or a cell phone model; and wherein the main body (30) has a rectangular LCD display (22) for displaying time in watch model or displaying received or transmitted information in cell phone model and twelve numerical symbol input keys (K1-K12) for corresponding to twelve inputting symbols including "0-9", "#" and "*" used for inputting controlled information in cell phone model respectively; **characterized in that** each of the twelve numerical symbol input keys (K1-K12) disposed on the main body (30) is respectively arranged to a position surrounded on the perimeter of the rectangular LCD display (30) and, when the cell phone module (20) being in watch model, served as a one-hour hand sequentially from the first hour to the twelfth hour for an electronic clock shown on the rectangular LCD display (30).

2. The watch-like cell phone as described in claim 1, **characterized in that** the expandable module (30) is one of the modules selected from a digital camera module having a lens, a memory module, a Bluetooth module, a GPS module, an MP3 module, or an electronic module for receiving and sending voices.

3. The watch-like cell phones as described in claims 1 or 2, **characterized in that** each of the twelve numerical symbol input keys is entirely disposed on an external perimeter surrounding the rectangular LCD display (30) of the main body (30) or entirely disposed on lateral sides of the main body (30), or a part of the twelve numerical symbol input keys disposed on lateral sides of the main body (30) and another part of the twelve numerical symbol input keys disposed on an external perimeter surrounding the LCD display of the main body (30).

4. The watch-like cell phones as described in any one of claims 1 to 3, **characterized in that** the strap module (30) is selected from a group consisting of flexible textiles, rubber, polyester materials, flexible printed circuits and flat flexible cables.

5. The watch-like cell phones as described in claim 4, **characterized in that** the flexible printed circuit of the strap module (30) further includes lens of digital camera, keys for the alphabets "A-Z", an USB slot or an electronic module for receiving and sending voices formed thereon.
